# EUROPÄISCHE PATENTSCHRIFT

(11) **EP 4 230 976 B1**
(45) Veröffentlichungstag und Bekanntmachung des Hinweises auf die Patenterteilung: **17.06.2026**
(21) Anmeldenummer: 22157101.1
(22) Anmeldetag: 16.02.2022
(51) Int. Cl.: G01J 3/02, G01J 3/447, G01J 3/45, G01B 11/16

(54) **MESSVORRICHTUNG ZUM VERMESSEN VON LICHT, MESSSYSTEM SOWIE MESSVERFAHREN ZUM ERKENNEN VON LICHTPARAMETERN**
MEASURING DEVICE FOR MEASURING LIGHT, MEASURING SYSTEM AND MEASURING METHOD FOR DETECTING LIGHT PARAMETERS
DISPOSITIF DE MESURE PERMETTANT DE MESURER LA LUMIÈRE, SYSTÈME DE MESURE, AINSI QUE PROCÉDÉ DE MESURE PERMETTANT DE DÉTECTER DES PARAMÈTRES DE LA LUMIÈRE

(43) Veröffentlichungstag der Anmeldung: 23.08.2023
(73) Patentinhaber: Lischtschenko, Oliver, 23923 Lüdersdorf (DE)
(72) Erfinder: Lischtschenko, Oliver, 23923 Lüdersdorf (DE)
(74) Vertreter: Bals & Vogel Patentanwälte PartGmbB

(56) Entgegenhaltungen:
- US-A1- 2020 256 667
- ALLCOCK J S ET AL: "2D measurements of plasma electron density using coherence imaging with a pixelated phase mask", REVIEW OF SCIENTIFIC INSTRUMENTS, AMERICAN INSTITUTE OF PHYSICS, 2 HUNTINGTON QUADRANGLE, MELVILLE, NY 11747, vol. 92, no. 7, 16 July 2021 (2021-07-16), XP012258207, ISSN: 0034-6748, [retrieved on 20210716], DOI: 10.1063/5.0050704
- JIN PENG ET AL: "High-SNR static Fourier-transform imaging spectrometer based on differential structure", PROGRESS IN BIOMEDICAL OPTICS AND IMAGING, SPIE - INTERNATIONAL SOCIETY FOR OPTICAL ENGINEERING, BELLINGHAM, WA, US, vol. 9328, 2 March 2015 (2015-03-02), pages 93280W - 93280W, XP060049155, ISSN: 1605-7422, ISBN: 978-1-5106-0027-0, DOI: 10.1117/12.2078136

## Beschreibung

Die Erfindung betrifft eine Messvorrichtung zum Vermessen von Licht, ein Messsystem, sowie ein Messverfahren zum Erkennen von Lichtparametern.

Es ist bekannt, anhand eines Interferenzverhaltens von Licht auf Eigenschaften des Lichtes und insbesondere auch der Lichtquelle zu schließen. Beispielsweise kann mit einem Michelson-Interferometer eine Längenänderung anhand eines Interferenzmusters zweier Teilstrahlen gemessen werden.

Derartige Messvorrichtungen sind jedoch in der Regel anfällig gegenüber äußeren Einflüssen, wie Temperaturschwankungen, Umgebungslicht oder mechanischen Vibrationen. Dies kann entsprechend zu Messfehlern und/oder einem hohen Kalibrier- und/oder Justieraufwand führen. Darüber hinaus bedürften derartige Messvorrichtungen eines komplexen Aufbaus, der entsprechend hohe Kosten nach sich ziehen kann.

Optische Messsysteme des Standes der Technik sind z. B. in den Dokumenten JIN PENG ET AL: "High-SNR static Fourier-transform imaging spectrometer based on differential structure" (ISBN: 978-1-5106-0027-0), der US 2020/256667 A1 sowie ALLCOCK J S ET AL: "2D measurements of plasma electron density using coherence imaging with a pixelated phase mask" (XP012258207), beschrieben.

Es ist eine Aufgabe der vorliegenden Erfindung, voranstehende, aus dem Stand der Technik bekannte Nachteile zumindest teilweise zu beheben. Insbesondere ist es eine Aufgabe der vorliegenden Erfindung eine kostengünstige und robuste Vermessung von Licht einer Lichtquelle zu ermöglichen.

Die voranstehende Aufgabe wird gelöst durch eine Messvorrichtung mit den Merkmalen des Anspruchs 1, ein Messsystem mit den Merkmalen des Anspruchs 12, sowie ein Messverfahren mit den Merkmalen des Anspruchs 14. Weitere Merkmale und Details der Erfindung ergeben sich aus den jeweiligen Unteransprüchen, der Beschreibung und den Zeichnungen. Dabei gelten Merkmale und Details, die im Zusammenhang mit der erfindungsgemäßen Messvorrichtung beschrieben sind, selbstverständlich auch im Zusammenhang mit dem erfindungsgemäßen Messsystem und/oder dem erfindungsgemäßen Messverfahren und jeweils umgekehrt, sodass bezüglich der Offenbarung zu den einzelnen Erfindungsaspekten stets wechselseitig Bezug genommen wird bzw. werden kann.

Gemäß einem ersten Aspekt der Erfindung ist eine Messvorrichtung zum Vermessen von Licht einer Lichtquelle vorgesehen. Die Messvorrichtung umfasst eine Optikeinheit zum Aufspalten eines polarisierten Lichtstrahls des Lichtes in einen ersten Teilstrahl und einen zweiten Teilstrahl, die zueinander eine definierte Phasenverschiebung aufweisen. Weiterhin umfasst die Messvorrichtung eine Sensoreinheit mit zumindest zwei Detektorelementen, die jeweils eine Polarisation mit einer jeweils unterschiedlichen Orientierung um eine optische Achse aufweisen. Der erste und zweite Teilstrahl sind durch die Optikeinheit gemeinsam auf die Detektorelemente ausrichtbar, um durch die Detektorelemente eine Interferenz des ersten und zweiten Teilstrahls zu erfassen. Die Lichtquelle kann beispielsweise einen Laser oder eine LED umfassen. Dabei wird das Licht von der Lichtquelle insbesondere in Richtung Messvorrichtung emittiert. Beispielsweise kann die Optikeinheit unmittelbar vor der Lichtquelle positioniert werden, um das Licht zu vermessen. Es ist denkbar, dass die Optikeinheit eine Linse aufweist, um das Licht der Lichtquelle aufzunehmen.

Es kann vorgesehen sein, dass das Licht der Lichtquelle vorpolarisiert ist. Beispielsweise kann es sich bei der Lichtquelle um eine polarisierte Lichtquelle handeln. Vorzugsweise handelt es sich bei dem Licht um schmalbandiges Licht.

Die optische Achse kann eine optische Achse der Optikeinheit und/oder des Lichtstrahls sein. Dabei kann die Optikeinheit durch den Lichtstrahl in gerader Linie oder in im Wesentlichen gerader Linie durchdringbar sein. Die Aufspaltung des ersten und zweiten Teilstrahls kann vorzugsweise derart erfolgen, dass beide Teilstrahlen die Ausbreitungsrichtung des Lichtstrahls beibehalten. Es kann vorgesehen sein, dass durch die Optikeinheit nur die Phase des Lichtstrahls beeinflusst wird, um den Lichtstrahl in die beiden Teilstrahlen mit der definierten Phasenverschiebung aufzuteilen.

Die Optikeinheit kann zur optischen, magnetischen und/oder elektrischen Beeinflussung von zumindest einer elektromagnetischen Eigenschaft, insbesondere einer Phase, des Lichtstrahls ausgebildet sein. Insbesondere kann die Optikeinheit für eine Doppelbrechung des Lichtstrahls ausgestaltet sein, um die Phasenverschiebung des ersten und zweiten Teilstrahls zu realisieren. Bei dem ersten Teilstrahl kann es sich um einen ordentlichen Strahl, bei dem zweiten Teilstrahl um einen außerordentlichen Strahl der Doppelbrechung handeln.

Die Detektorelemente können Halbleiterbauelemente, beispielsweise in Form von Fotodioden, umfassen, durch welche in Abhängigkeit von der Interferenz des ersten und zweiten Teilstrahls ein elektrisches Signal ausgebbar ist. Anhand des elektrischen Signals kann beispielsweise durch eine Auswerteeinheit auf Lichtparameter des Lichtes geschlossen werden.

Vorzugsweise weist die Messvorrichtung ein Gehäuse auf, in welchem die Sensoreinheit und/oder die Optikeinheit angeordnet sind. Das Gehäuse kann beispielsweise einen Kunststoff umfassen. Durch das Gehäuse können störende Effekte eines Umgebungslichtes reduziert oder vermieden werden. Ferner können die Komponenten der Messvorrichtung durch das Gehäuse geschützt sein.

Bei der Interferenz handelt es sich insbesondere um eine polarisierte Interferenz. Zur Polarisation der Detektorelemente kann die Sensoreinheit Polarisatoren umfassen. Weiterhin ist es denkbar, dass die Detektorelemente jeweils einen Polarisator, z. B. in Form eines Polarisationsfilters, umfassen. Vorzugsweise kann der Polarisator, insbesondere in Form eines chip-integrierten Polarisators, in die Detektorelemente integriert sein. Beispielsweise können die Detektorelemente komplementäre Metalloxid-Halbleiter (CMOS) mit Metallgitter-Polarisatoren umfassen.

Unter der gemeinsamen Ausrichtung der beiden Teilstrahlen auf die Detektorelemente kann verstanden werden, dass auf jedes der Detektorelemente zumindest ein Teilbereich der Interferenz ausrichtbar ist. Vorzugsweise ist ein Interferenzmuster der Interferenz zentriert zu den Detektorelementen ausgerichtet, sodass das Interferenzmuster gleichmäßig auf die Detektorelemente verteilt ist. Beispielsweise kann die Interferenz derart ausgerichtet sein, dass durch jedes der Detektorelemente ein gleicher Intensitätswert des Lichtes messbar ist. Es ist jedoch ebenso denkbar, dass das Interferenzmuster ungleich auf die Detektorelemente verteilt ist. In diesem Fall kann die Messvorrichtung und/oder ein übergeordnetes Messsystem justiert oder justierbar oder kalibriert oder kalibierbar sein, um die Ungleichverteilung, insbesondere rechnerisch, auszugleichen. Beispielsweise können die Detektorelemente in Abhängigkeit von einer jeweils gemessenen Intensität des Lichtes gewichtet sein.

Es ist somit im Rahmen der vorliegenden Erfindung erkannt worden, dass das Erfassen des Lichtstrahls, insbesondere eines einzigen Lichtstrahls, ausreichen kann, um das Licht zu vermessen. Durch die gemeinsame Ausrichtung des ersten und zweiten Lichtstrahls kann die Komplexität der Messvorrichtung reduziert werden. Dadurch kann ferner eine hohe Robustheit der Messvorrichtung erzielt werden, bei welcher die Messvorrichtung weniger anfällig gegenüber äußeren Einflüssen, wie z. B. Temperaturschwankungen, ist. Gleichzeitig kann durch die Messvorrichtung eine präzise Messung von Lichtparametern anhand von Ausgangsgrößen der Detektorelemente durchgeführt werden.

Weiterhin ist es bei einer erfindungsgemäßen Messvorrichtung denkbar, dass die Optikeinheit zumindest ein Verzögerungselement, insbesondere in Form eines doppelbrechenden Mediums, umfasst. Bei dem doppelbrechenden Medium kann es sich z. B. um einen doppelbrechenden Kristall oder ein doppelbrechendes Kunststoffelement handeln. Das Verzögerungselement kann eine Verzögerungsplatte umfassen. Es kann vorgesehen sein, dass die Optikeinheit zum Aufspalten des polarisierten Lichtstrahls in den ersten und zweiten Teilstrahl mehrere, insbesondere hintereinandergeschaltete, Verzögerungselemente umfasst. Insbesondere wenn es sich bei dem Medium um einen Kristall handelt, kann der Kristall beispielsweise ein Mineral einer Glimmergruppe umfassen. Durch das Medium kann die definierte Phasenverschiebung des ersten und zweiten Teilstrahls vorgebbar sein. Durch das doppelbrechende Medium kann die Phasenverschiebung statisch vorgegeben sein. Durch die Art des doppelbrechenden Mediums kann die Phasenverschiebung einstellbar sein. Beispielsweise kann das Medium in Abhängigkeit von einer Art des Lichtes oder der Lichtquelle spezifisch ausgebildet sein. Es ist denkbar, dass die Messvorrichtung eine Wechselvorrichtung zum Auswechseln des Medium in Abhängigkeit von dem Licht oder der Lichtquelle aufweist. Dadurch kann die Messvorrichtung flexibel an einen Einsatzzweck anpassbar sein.

Ferner kann bei einer erfindungsgemäßen Messvorrichtung vorteilhafterweise vorgesehen sein, dass die Messvorrichtung, vorzugsweise die Optikeinheit, ein Polarisationselement zum Beeinflussen, insbesondere zum Ändern, einer Polarisation des Lichtes für den polarisierten Lichtstrahl aufweist. Insbesondere ist durch das Polarisationselement der polarisierte Lichtstrahl aus dem Licht erzeugbar. Vorzugsweise ist das Polarisationselement dem Verzögerungselement in der Optikeinheit in Bezug auf eine Ausbreitungsrichtung vorgeschaltet. Es ist jedoch ebenso denkbar, dass das Polarisationselement außerhalb der Optikeinheit angeordnet ist, um den polarisierten Lichtstrahl zu erzeugen. Durch das Polarisationselement kann durch die Messvorrichtung unpolarisiertes oder nicht-linear polarisiertes Licht der Lichtquelle vermessen werden.

Es ist ferner bei einer erfindungsgemäßen Messvorrichtung denkbar, dass das Polarisationselement zum Erzeugen einer linearen und/oder zufälligen Polarisation des Lichtstrahls ausgebildet ist. Dadurch kann nicht-linear polarisiertes Licht der Lichtquelle durch die Messvorrichtung vermessen werden. Beispielsweise kann das Polarisationselement einen Diffusor und/oder eine Wellenplatte umfassen. Zusätzlich oder alternativ können Polarisationseffekte des Lichtes durch Messen eines Polarisationswinkels in der Optikeinheit in einem Kalibrier- und/oder Justiervorgang ermittelt und beim Auswerten der Interferenz berücksichtigt werden.

Im Rahmen der Erfindung ist es weiterhin vorgesehen, dass eine Kanalisationseinheit zum Kanalisieren und/oder Diskretisieren des Lichtes in Abhängigkeit von dem empfangenen Licht vorgesehen ist, die der Optikeinheit optisch vorgeschaltet ist, wobei das empfangene Licht durch die Kanalisationseinheit in ein einkanaliges Licht umgewandelt wird. Das einkanalige Licht kann den Lichtstrahl bilden und/oder durch das Polarisationselement in den Lichtstrahl transformiert werden. Durch die Kanalisationseinheit erfolgt eine Reduktion der Lichtinformationen, um die Komplexität des empfangenen Lichtes zu reduzieren. Beispielsweise kann das Licht auf einen Bildpunkt, insbesondere zur Darstellung eines Pixels, reduziert werden. Unter dem einkanaligen Licht kann insbesondere verstanden werden, dass das Licht eine einzige Mode aufweist. Die Kanalisationseinheit kann beispielsweise eine Lochblende umfassen, um das empfangene Licht auf das einkanalige Licht zu reduzieren. Somit kann die Diskretisierung des Lichtes optisch, und insbesondere vor dem Eintritt des Lichtes in die Optikeinheit, erfolgen. Im Rahmen der Erfindung ist erkannt worden, dass eine Auswertung von reduzierten Lichtinformationen für viele Anwendungen ausreichend ist. Dadurch kann die Komplexität der Messvorrichtung reduziert und die Robustheit erhöht werden. Ferner kann eine Rechenleistung der Auswerteeinheit aufgrund der frühzeitigen Diskretisierung reduziert werden.

Es ist ferner bei einer erfindungsgemäßen Messvorrichtung denkbar, dass die Kanalisationseinheit ein Kanalisationselement in Form einer optischen Faser, insbesondere in Form einer Einmodenfaser, zum Kanalisieren des Lichtes aufweist. Dabei kann die Kanalisationseinheit und/oder die Messvorrichtung genau eine, d.h. insbesondere eine einzige, optische Faser umfassen. Die optische Faser kann vorzugsweise durch eine Glasfaser gebildet sein. Durch die optische Faser kann das Licht somit in ein einkanaliges Licht umwandelbar sein. Eine Einmodenfaser kann auch als Monomodefaser bezeichnet werden. Durch das Kanalisationselement können somit Lichtinformationen in vorteilhafterweise reduziert werden, um die Interferenz auf den Detektorelementen zu realisieren und/oder die Auswertung zu vereinfachen.

Es ist ferner bei einer erfindungsgemäßen Messvorrichtung denkbar, dass die Kanalisationseinheit zum Formen eines Strahlengangs des Lichtes einen Kollimator und/oder eine Lochblende aufweist. Vorzugsweise ist der Kollimator und/oder die Lochblende der Optikeinheit in Bezug auf eine Ausbreitungsrichtung des Lichtes vorgeschaltet. Beispielsweise kann der Kollimator einen Eingang zum Empfang des Lichtes der Messvorrichtung bilden. Durch den Kollimator kann ein paralleler oder nahezu paralleler Strahlengang des Lichtes und damit insbesondere eine lineare oder annähernd lineare Führung des Lichtes erzeugt werden. Die Lochblende kann vorzugsweise zumindest eine Öffnung zum Formen des Strahlengangs umfassen, die einen Öffnungsdurchmesser von kleiner oder gleich 2 mm aufweist. Durch das Formen des Strahlengangs des Lichtes kann der Lichtstrahl ausgerichtet sein oder werden. Dadurch kann die Führung des Lichtes in der Messvorrichtung verbessert sein, wodurch Messfehler und/oder ein Justageaufwand reduziert werden können.

Vorzugsweise kann bei einer erfindungsgemäßen Messvorrichtung vorgesehen sein, dass die Sensoreinheit drei oder mehr Detektorelemente aufweist, die insbesondere in einem Muster angeordnet sind. Bei dem Muster kann es sich um ein regelmäßiges Muster handeln. Durch eine größere Anzahl an Detektorelementen kann die Messgenauigkeit verbessert werden. Das Muster kann reihenartig und/oder matrixartig ausgestaltet sein. Beispielsweise kann die Sensoreinheit vier Detektorelemente umfassen, die vorzugsweise in einem 2x2-Muster, insbesondere mit einem gemeinsamen Mittelpunkt, angeordnet sind. Insbesondere ist somit eine Ausrichtung der Interferenz auf alle Detektorelemente in einfacher Art und Weise möglich. Beispielsweise kann eine Intensität des Lichtes über die Detektorelemente gleichmäßig verteilt sein. Es ist jedoch ebenso denkbar, dass die Detektorelemente nebeneinander aufgereiht sind. In diesem Fall kann die Interferenz ungleich über die Detektorelemente verteilt sein. Es kann vorgesehen sein, dass durch eine Auswerteeinheit eines übergeordneten Messsystems ein Kalibrier- und/oder Justiervorgang durchführbar ist, um eine Ungleichverteilung der Interferenz über die Detektorelemente beim Auswerten der Interferenz zu berücksichtigen.

Weiterhin ist es bei einer erfindungsgemäßen Messvorrichtung denkbar, dass die Sensoreinheit einen elektrischen Messausgang zur Ausgabe einer Modulation eines, insbesondere elektrischen, Signals und/oder zur Ausgabe von Datenpunkten zur Modulation eines, insbesondere elektrischen, Signals in Abhängigkeit von der Interferenz aufweist. Dabei ist das Signal insbesondere charakteristisch für Lichtparameter des Lichtes. Das Signal kann beispielsweise Sinus- oder Kosinus-förmig sein. Dabei kann das Signal beispielsweise eine Intensität des Lichtes und/oder eine zur Intensität des Lichtes proportionale elektrische Größe abbilden. Anhand der Datenpunkte kann dein Verlauf des Signals bestimmbar sein. Durch die Modulation des Signals können die Lichtparameter bestimmt werden.

Es ist ferner bei einer erfindungsgemäßen Messvorrichtung denkbar, dass die Sensoreinheit eine Auswerteschaltung aufweist, in welcher die Detektorelemente zum Erfassen der Interferenz verschaltet sind, vorzugsweise wobei die Auswerteschaltung dazu ausgebildet ist, das Signal und/oder die Datenpunkte durch ein Multiplexverfahren, insbesondere in Form eines Raummultiplexverfahrens und/oder eines Zeitmultiplexverfahrens, bereitzustellen. Für das Raummultiplexverfahren kann die Auswerteschaltung mehrere Übertragungskanäle aufweisen, die, insbesondere zur parallelen und gleichzeitig exklusiven Nutzung durch die Detektorelemente, matrixartig ausgebildet und/oder gebündelt sind. Dabei kann die Auswerteschaltung mehrere Schalter umfassen, um Signalwege in der Auswerteschaltung zu definieren und/oder zu beeinflussen. Durch die Auswerteschaltung kann ein elektrisches Signal für jedes der Detektorelemente ausgebbar sein. Ferner kann das elektrische Signal durch die Auswerteschaltung jedem der Detektorelemente zuordenbar sein. Somit wird eine vorteilhafte Auswertung der Detektorelemente ermöglicht. Ferner kann durch das Multiplexverfahren ein Bauraum der Messvorrichtung reduziert sein.

Weiterhin ist es bei einer erfindungsgemäßen Messvorrichtung denkbar, dass die Detektorelemente schichtartig auf einer Leiterplatte der Sensoreinheit befestigt, insbesondere aufgedruckt, sind. Dadurch kann die Messvorrichtung kompakt ausgestaltet sein. Weiterhin kann durch einen Druckvorgang eine dünnschichtige, präzise Fertigung ermöglicht sein, wodurch eine Messgenauigkeit der Messvorrichtung verbessert sein kann.

Weiterhin kann bei einer erfindungsgemäßen Messvorrichtung vorteilhafterweise vorgesehen sein, dass die Sensoreinheit und/oder die Detektorelemente zum Justieren der Messvorrichtung relativ zur Optikeinheit drehbar ausgestaltet sind. Dabei können die Sensoreinheit und/oder die Detektorelemente drehbar in einem Gehäuse der Messvorrichtung angeordnet sein. Es ist jedoch ebenso denkbar, dass die Optikeinheit drehbar im Gehäuse angeordnet ist. Dadurch können beim Justieren entstandene optische Effekte, wie z. B. ein Versatz des Lichtstrahls und/oder der beiden Teilstrahlen mechanisch, optisch und/oder numerisch ausgeglichen werden.

Gemäß einem weiteren Aspekt der Erfindung ist ein Messsystem zum Erkennen von Lichtparametern von Licht einer Lichtquelle vorgesehen. Das Messsystem weist eine erfindungsgemäße Messvorrichtung nach Anspruch 1 auf, die eine Optikeinheit zum Aufspalten eines polarisierten Lichtstrahls des Lichtes in einen ersten Teilstrahl und einen zweiten Teilstrahl, die zueinander eine definierte Phasenverschiebung aufweisen, umfasst. Weiterhin umfasst die Messvorrichtung eine Sensoreinheit mit zumindest zwei Detektorelementen, die jeweils eine Polarisation mit einer unterschiedlichen Orientierung um eine optische Achse aufweisen. Dabei sind der erste und zweite Teilstrahl durch die Optikeinheit gemeinsam auf die Detektorelemente ausrichtbar, um durch die Detektorelemente eine Interferenz des ersten und zweiten Teilstrahls zu erfassen. Ferner umfasst das Messsystem eine Auswerteeinheit zum Auswerten der Interferenz zum Erkennen von Lichtparametern des Lichtes.

Somit bringt ein erfindungsgemäßes Messsystem die gleichen Vorteile mit sich, wie sie bereits ausführlich mit Bezug auf eine erfindungsgemäße Messvorrichtung beschrieben worden sind. Die Auswerteeinheit kann einen Prozessor und/oder einen Mikroprozessor umfassen. Ferner kann die Auswerteeinheit in die Messvorrichtung integriert sein oder separat zu der Messvorrichtung ausgeführt sein. Beispielsweise kann die Messvorrichtung einen Messausgang aufweisen, an welchen die Auswerteeinheit angeschlossen oder anschließbar ist.

Es kann vorgesehen sein, dass die Lichtquelle Teil des Messsystems ist. Beispielsweise kann die Lichtquelle ein Fiber-Bragg-Gitter, insbesondere zur Messung einer Dehnung eines Bauteils, umfassen. So ist es denkbar, dass das Messsystem zur Dehnungsmessung in einer Windkraftanlage und/oder einem Fahrzeug ausgestaltet ist. Ferner kann es sich bei der Lichtquelle z. B. um einen Laser und/oder eine Komponente zur atomaren Emission handeln. Dabei kann die Messvorrichtung zur Bestimmung einer Wellenlänge und/oder Bandbreite des von der Lichtquelle emittierten Lichtes eingesetzt werden.

Weiterhin kann bei einem erfindungsgemäßen Messsystem vorteilhafterweise vorgesehen sein, dass die Auswerteeinheit zum Bestimmen der Lichtparameter in Form einer Wellenlänge des Lichtes in Abhängigkeit von einer Phase der Interferenz, einer Bandbreite des Lichtes in Abhängigkeit von einer Amplitude der Interferenz und/oder einer Leistung des Lichtes in Abhängigkeit von einem Mittelwert der Interferenz ausgebildet ist. Dazu kann beispielsweise ein elektrisches Signal der Sensoreinheit abgetastet werden, um die Lichtparameter anhand des Signals zu bestimmen.

Gemäß einem weiteren Aspekt der Erfindung ist ein Messverfahren zum Erkennen von Lichtparametern von Licht einer Lichtquelle durch ein erfindungsgemäßes Messsystem vorgesehen. Das Messverfahren umfasst dabei, insbesondere in Form von Verfahrensschritten:
- Empfangen von Licht von einer Lichtquelle, durch eine Messvorrichtung des Messsystems nach Anspruch 12
- Aufspalten eines polarisierten Lichtstrahls des Lichtes in einen ersten Teilstrahl und einen zweiten Teilstrahl, die zueinander eine definierte Phasenverschiebung aufweisen, insbesondere durch eine Optikeinheit der Messvorrichtung,
- Erzeugen einer Interferenz in Abhängigkeit dem ersten und zweiten Teilstrahl, insbesondere durch die Optikeinheit,
- Erkennen von Lichtparametern des Lichtes in Abhängigkeit von der Interferenz, insbesondere durch eine Auswerteeinheit des Messsystems.

Somit bringt ein erfindungsgemäßes Messverfahren die gleichen Vorteile mit sich, wie sie bereits ausführlich mit Bezug auf eine erfindungsgemäße Messvorrichtung und/oder ein erfindungsgemäßes Messsystem beschrieben worden sind. Anhand der Lichtparameter kann beispielsweise eine Dehnungsmessung, vorzugsweise in einer Windkraftanlage und/oder in einem Fahrzeug, erfolgen, insbesondere wenn die Lichtquelle ein Fiber-Bragg-Gitter umfasst. Es ist jedoch ebenso denkbar, dass die Lichtquelle selbst anhand der Lichtparameter charakterisiert wird.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Figur 1: ein erfindungsgemäßes Messsystem mit einer erfindungsgemäßen Messvorrichtung in einem ersten Ausführungsbeispiel,
- Figur 2: eine Explosionsansicht des Messsystems mit der Messvorrichtung,
- Figur 3: ein Messverfahren zum Erkennen von Lichtparametern von Licht einer Lichtquelle durch das Messsystem,
- Figur 4: ein elektrisches Signal einer Sensoreinheit der Messvorrichtung, und
- Figuren 5+6: weitere Ausgestaltungsmöglichkeiten der Messvorrichtung.

In der nachfolgenden Beschreibung zu einigen Ausführungsbeispielen der Erfindung werden für die gleichen technischen Merkmale auch in unterschiedlichen Ausführungsbeispielen die identischen Bezugszeichen verwendet.

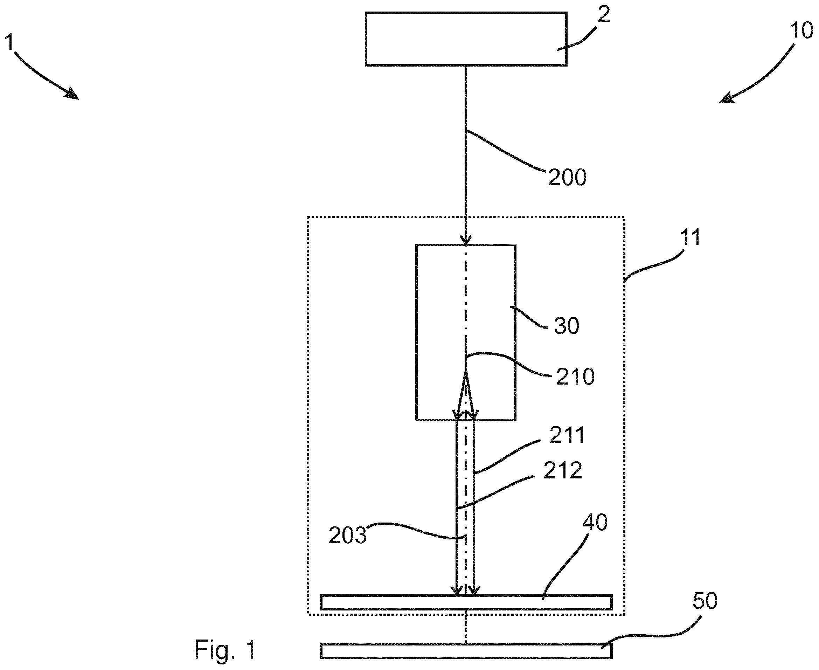

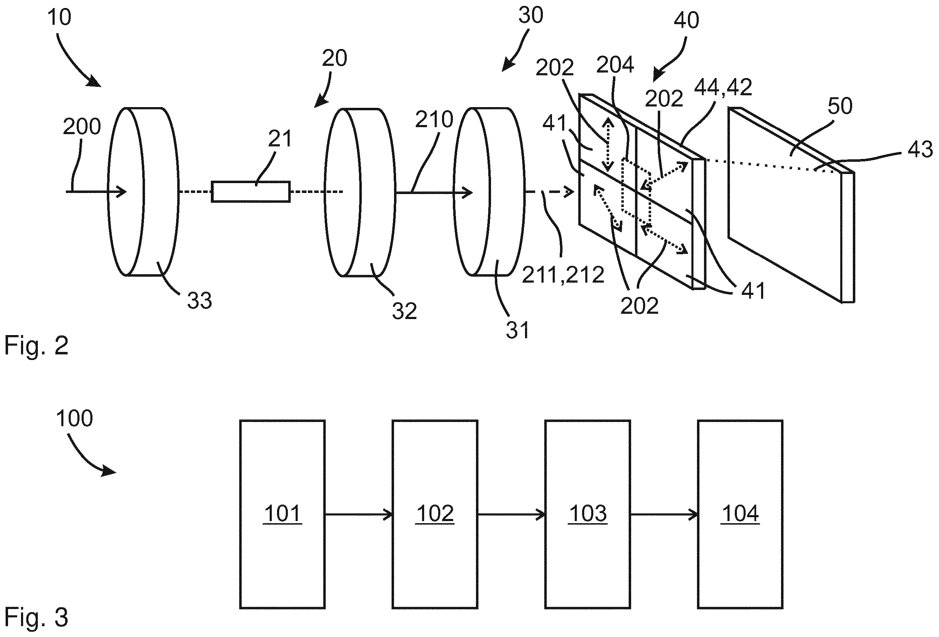

Figur 1 zeigt ein erfindungsgemäßes Messsystem 1 zum Erkennen 104 von Lichtparametern 201 von Licht 200 einer Lichtquelle 2. Bei der Lichtquelle 2 kann es sich z. B. um einen Laser oder ein Fiber-Bragg-Gitter handeln. Dabei kann die Lichtquelle 2 durch das Messsystem 1 anhand der Lichtparameter 201 selbst charakterisierbar sein. Insbesondere wenn es sich bei der Lichtquelle 2 um ein Fiber-Bragg-Gitter handelt, kann durch die Lichtparameter 201 jedoch auch ein externer Effekt, wie z. B. eine Dehnung oder eine Dehnungsänderung eines Bauteils, erkannt werden. Die Lichtquelle 2 kann in das Messsystem 1 integriert sein, oder extern zu dem Messsystem 1 vorgesehen sein und lediglich das Licht 200 in Richtung des Messsystems 1 emittieren. Ein erfindungsgemäßes Messverfahren 100 zum Erkennen der Lichtparameter 201 des Lichtes 200 der Lichtquelle 2 durch das Messsystem 1 ist in Figur 3 in schematischer Darstellung von Verfahrensschritten gezeigt. Das Messverfahren 100 wird nachfolgend im Zusammenhang mit dem Messsystem 1 erläutert.

Zum Vermessen des Lichtes 200 der Lichtquelle 2 weist das Messsystem 1 eine erfindungsgemäße Messvorrichtung 10 auf. Die Messvorrichtung 10 umfasst eine Optikeinheit 30 zum Aufspalten 102 eines polarisierten Lichtstrahls 210 des Lichtes 200 in einen ersten Teilstrahl 211 und einen zweiten Teilstrahl 212. Es ist denkbar, dass die Lichtquelle 2 selbst bereits, insbesondere linear, polarisiertes Licht 200 aussendet, sodass der Lichtstrahl 210 bereits beim Eintreffen in die Optikeinheit 30 polarisiert ist. Das Aufspalten 102 des Lichtstrahls 210 durch die Optikeinheit 30 erfolgt derart, dass der erste und zweite Teilstrahl 201, 202 zueinander eine definierte Phasenverschiebung aufweisen.

Zum Erkennen einer Interferenz 204 des ersten und zweiten Teilstrahls 211, 212 umfasst die Messvorrichtung 10 eine Sensoreinheit 40. Der erste und zweite Teilstrahl 211, 212 sind zur verbesserten Darstellung in Figur 1 getrennt gezeigt, können die Optikeinheit 30 jedoch gerichtet, parallel und/oder konzentrisch verlassen, wodurch der erste und zweite Teilstrahl 211, 212 im Bereich der Sensoreinheit 40 interferieren, d. h. insbesondere das Erzeugen 103 der Interferenz 204 erfolgt. Die daraus resultierende Interferenz 204 des ersten und zweiten Teilstrahls 211, 212 kann durch die Sensoreinheit 40 erfasst werden. Vorzugsweise weist die Messvorrichtung 10 ein Gehäuse 11 auf, in welchem die Optikeinheit 30 und die Sensoreinheit 40 angeordnet sind.

Zum Auswerten der Interferenz 204 zum Erkennen 104 der Lichtparameter 201 des Lichtes 200 weist das Messsystem 1 eine Auswerteeinheit 50 auf, die mit der Sensoreinheit 40 verbunden ist. Die Auswerteeinheit 50 kann beispielsweise einen Prozessor und/oder einen Mikroprozessor umfassen.

Figur 2 zeigt eine detailliertere Ausgestaltung der Messvorrichtung 10. Dabei umfasst die Messvorrichtung 10 eine Linse 33 zum Empfangen 101 des Lichtes 200 von der Lichtquelle 2. Dadurch kann der Lichtstrahl 210 erzeugt werden, der in Abhängigkeit von der Lichtquelle 2 zunächst nicht-linear polarisiert oder unpolarisiert (hier gestrichelt dargestellt) sein kann. Die Linse 33 kann einen Eingang in das Gehäuse 11 der Messvorrichtung 10 bilden.

Weiterhin umfasst die Messvorrichtung 10 eine Kanalisationseinheit 20 zum Kanalisieren und/oder Diskretisieren des Lichtes 200 in Abhängigkeit von dem empfangenen Licht 200. Die Kanalisationseinheit 20 kann der Optikeinheit 30 optisch vorgeschaltet sein. Die Kanalisationseinheit 20 ist insbesondere dazu ausgebildet, das empfangene Licht 200 in ein einkanaliges Licht 200 umzuwandeln. Dazu weist die Kanalisationseinheit 20 beispielsweise ein Kanalisationselement 21 in Form einer optischen Faser, insbesondere in Form einer Einmodenfaser, zum Kanalisieren des Lichtes 200 auf. Durch das Kanalisationselement 21 können somit Lichtinformationen des Lichtes 200 reduziert werden. Beispielsweise kann eine Vielzahl an vorliegenden Lichtparametern 201 des Lichtes 200 verringert werden.

Insbesondere wenn das Licht 200 der Lichtquelle 2 zunächst unpolarisiert ist, umfasst die Messvorrichtung 10, insbesondere die Optikeinheit 30, ferner ein Polarisationselement 32 zum Beeinflussen einer Polarisation des Lichtes 200 für den polarisierten Lichtstrahl 210. Das Polarisationselement 32 kann z. B. zum Erzeugen einer linearen und/oder zufälligen Polarisation des Lichtstrahls 210 ausgebildet sein. Dadurch kann eine Voraussetzung für die Aufspaltung des polarisierten Lichtstrahls 210 in den ersten und zweiten Teilstrahl 211, 212 mit der anschließenden Interferenz 204 geschaffen werden.

Für das Aufspalten 102 des polarisierten Lichtstrahls 210 in den ersten und zweiten Teilstrahl 211, 212 mit der definierten Phasenverschiebung weist die Optikeinheit 30 zumindest ein Verzögerungselement 31, insbesondere in Form eines doppelbrechenden Mediums, wie z. B. eines Kristalls, auf. Insbesondere kann der erste Teilstrahl 211 auch als ordentlicher Strahl und der zweite Teilstrahl 212 als außerordentlicher Strahl und/oder der erste Teilstrahl 211 als langsamer Strahl und der zweite Teilstrahl 212 als schneller Strahl oder umgekehrt bezeichnet werden. Es kann vorgesehen sein, dass die Optikeinheit 30 mehrere Verzögerungselemente 31 aufweist, die optisch hintereinandergeschaltet sind, um den ersten und zweiten Teilstrahl 211, 212 zu erzeugen.

Wie in Figur 2 gezeigt, weist die Sensoreinheit 40 zwei oder mehr, hier vier Detektorelemente 41 auf. Dabei sind Detektorelemente 41 in einem Muster angeordnet. Das Muster kann als regelmäßiges Muster ausgestaltet sein. Dabei sind der erste und zweite Teilstrahl 211, 212 durch die Optikeinheit 30 gemeinsam auf die Detektorelemente 41 ausrichtbar. Eine optische Achse 203, insbesondere des Lichtstrahls 210 und/oder der Optikeinheit 30, ist vorzugsweise derart zu dem Muster ausgerichtet, dass eine Intensität des ersten und zweiten Teilstrahls 211, 212 gleichmäßig auf die Detektorelemente 41 verteilbar ist. Beispielsweise kann die optische Achse 203 zentriert zu dem Muster ausrichtbar oder ausgerichtet sein. Im vorliegenden Ausführungsbeispiel der Figur 2 sind die Detektorelemente 41 in einem matrixartigen Muster, insbesondere in einem 2x2-Muster, angeordnet.

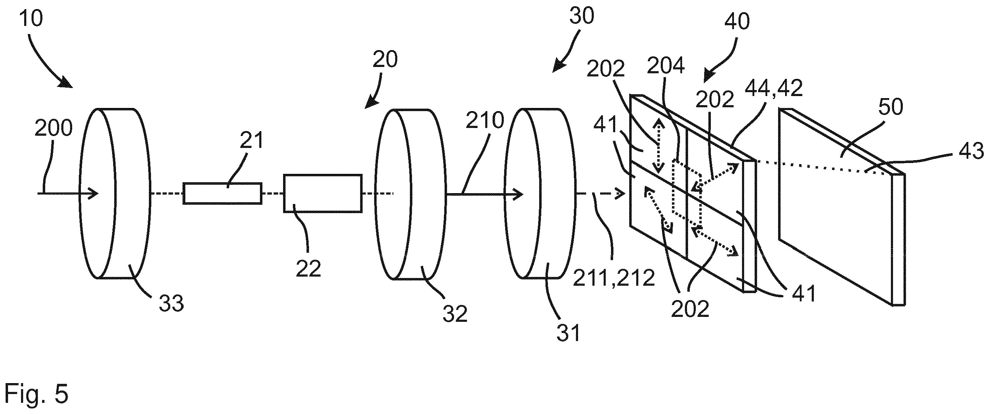

Wie in Figur 5 dargestellt, kann die Kanalisationseinheit 20 ferner einen Kollimator 22 zum Formen und/oder Parallelisieren eines Strahlengangs des Lichtes 200 aufweisen. Durch den Kollimator 22 kann ein paralleler oder nahezu paralleler Strahlengang des Lichtes 200, und damit vorzugsweise eine lineare oder annähernd lineare Führung des Lichtes 200, erzeugt werden, um die Ausrichtung des Lichtstrahls 210 zu verbessen. Zusätzlich oder alternativ zu dem Kollimator 22 kann die Kanalisationseinheit 20 eine Lochblende umfassen.

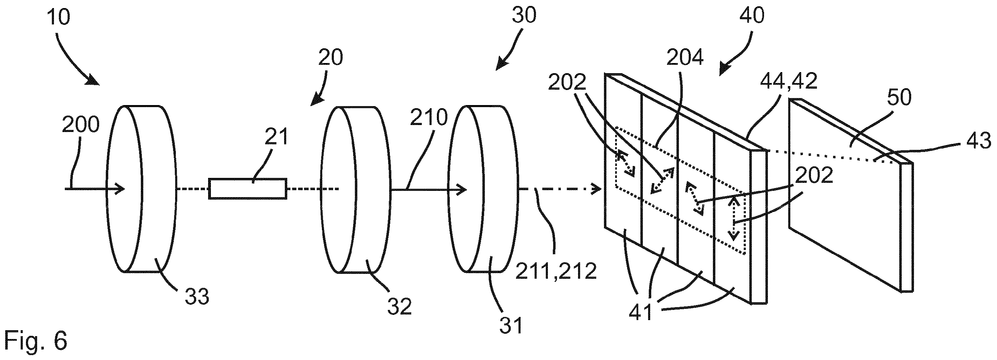

Zusätzlich oder alternativ kann vorgesehen sein, dass die Detektorelemente 41 reihenartig nebeneinander angeordnet sind, wie in Figur 6 gezeigt. In diesem Fall kann eine Ungleichverteilung des ersten und zweiten Teilstrahls 211, 212 und/oder der Intensität des ersten und zweiten Teilstrahls 211, 212 durch einen Justiervorgang, z. B. durch die Auswerteeinheit 50, ermittelt und/oder herausgerechnet werden.

Die Detektorelemente 41 weisen ferner jeweils eine Polarisation 202 mit einer jeweils unterschiedlichen Orientierung um die optische Achse 203 auf. Somit umfasst die Sensoreinheit 40 mit den vier Detektorelementen 41 auch vier unterschiedliche Polarisationen 202. Dazu kann beispielsweise jeweils ein Polarisator in jedes der Detektorelemente 41 integriert sein. Es kann vorgesehen sein, dass die Sensoreinheit 40 und/oder die Detektorelemente 41 zum Justieren der Messvorrichtung 10 relativ zur Optikeinheit 30 drehbar ausgestaltet sind. Zusätzlich oder alternativ können die Detektorelemente 41 schichtartig auf einer Leiterplatte 44 der Sensoreinheit 40 befestigt, insbesondere aufgedruckt, sein.

Weiterhin umfasst die Sensoreinheit 40 eine Auswerteschaltung 42, durch welche die Detektorelemente 41 zum Erfassen der Interferenz 204 verschaltet sind. Zur Ausgabe eines Signals 205 weist die Sensoreinheit 40 ferner einen elektrischen Messausgang 43 zur Ausgabe einer Modulation des Signals 205 und/oder von Datenpunkten 205.1 zur Modulation des Signals 205 in Abhängigkeit von der Interferenz 204 auf. Dazu ist die Auswerteschaltung 42 dazu ausgebildet, das Signal 205 und/oder die Datenpunkte 205.1 in einem Multiplexverfahren, insbesondere in Form eines Raummultiplexverfahrens, bereitzustellen. Die Auswerteschaltung 42 kann insbesondere auf der Leiterplatte 44, beispielsweise auf einer Rückseite der Leiterplatte 44, angeordnet sein.

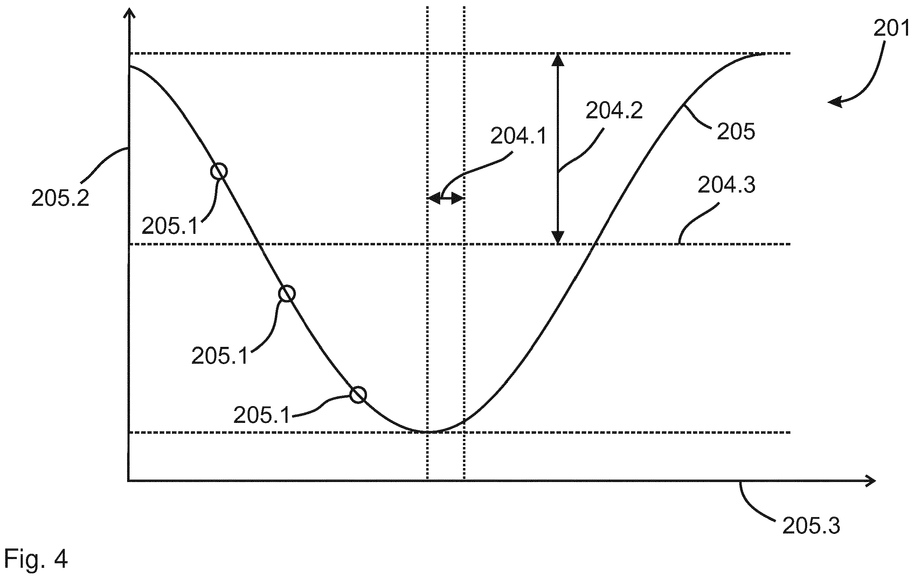

Das Signal 205 ist in Figur 4 dargestellt. Dabei ist eine Signalintensität 205.2 gegenüber einer Signalphase 205.3 aufgetragen. Die Signalintensität 205.2 und die Signalphase 205.3 können in dem Signal in Form von elektrischen Stromparametern und/oder einer Zeit repräsentiert sein. Die Signalintensität 205.2 kann beispielsweise durch einen Strom und/oder eine Spannung am Messausgang 43 repräsentiert und/oder proportional zu einer Intensität des Lichtes 200 sein. Die Signalphase 205.3 kann durch das Auslesen eines der Detektorelemente 41 und/oder eine Zeit bei dem Multiplexverfahren ausgedrückt sein. Die Auswerteeinheit 50 ist dabei zum Bestimmen der Lichtparameter 201 in Form einer Wellenlänge des Lichtes 200 in Abhängigkeit von einer Phase 204.1 der Interferenz 204, in Form einer Bandbreite des Lichtes 200 in Abhängigkeit von einer Amplitude 204.2 der Interferenz 204 und/oder in Form einer Leistung des Lichtes 200 in Abhängigkeit von einem Mittelwert 204.3 der Interferenz 204 ausgebildet. Dazu kann das Signal 205 durch die Auswerteeinheit 50 ausgewertet werden.

Durch die gemeinsame Ausrichtung des ersten und zweiten Lichtstrahls 210 kann die Komplexität der Messvorrichtung 10 reduziert werden, indem das Vermessen des Lichtes 200 anhand des Lichtstrahls 210, insbesondere eines einzigen Lichtstrahls 210, durchgeführt wird. Im Rahmen der Erfindung ist somit erkannt worden, dass eine Auswertung von reduzierten Lichtinformationen für viele Anwendungen ausreichend ist. Dadurch kann die Komplexität des Messsystems 1 mit der Messvorrichtung 10 reduziert und die Robustheit des Messverfahrens 100 gegenüber Umwelteinflüssen erhöht werden.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen, der durch die nachfolgenden Ansprüche definiert wird.

### Bezugszeichenliste

- 1: Messsystem
- 2: Lichtquelle

- 10: Messvorrichtung
- 11: Gehäuse

- 20: Kanalisationseinheit
- 21: Kanalisationselement
- 22: Kollimator

- 30: Optikeinheit
- 31: Verzögerungselement
- 32: Polarisationselement
- 33: Linse

- 40: Sensoreinheit
- 41: Detektorelementen
- 42: Auswerteschaltung
- 43: Messausgang
- 44: Leiterplatte

- 50: Auswerteeinheit

- 100: Messverfahren

- 200: Licht
- 201: Lichtparametern
- 202: Polarisation
- 203: Achse
- 204: Interferenz
- 204.1: Phase
- 204.2: Amplitude
- 204.3: Mittelwert
- 205: Signal
- 205.1: Datenpunkt
- 205.2: Signalintensität
- 205.3: Signalphase

- 210: Lichtstrahl
- 211: erster Teilstrahl
- 212: zweiter Teilstrahl

## Patentansprüche

1. Messvorrichtung (10) zum Vermessen von Licht (200) einer Lichtquelle (2) aufweisend eine Optikeinheit (30) zum Aufspalten eines polarisierten Lichtstrahls (210) des Lichtes (200) in einen ersten Teilstrahl (211) und einen zweiten Teilstrahl (212), die zueinander eine definierte Phasenverschiebung aufweisen, und
eine Sensoreinheit (40) mit zumindest zwei Detektorelementen (41), die jeweils eine Polarisation (202) mit einer unterschiedlichen Orientierung um eine optische Achse (203) aufweisen, wobei der erste und zweite Teilstrahl (211, 212) durch die Optikeinheit (30) gemeinsam auf die Detektorelemente (41) ausrichtbar sind, um durch die Detektorelemente (41) eine Interferenz (204) des ersten und zweiten Teilstrahls (211, 212) zu erfassen,
wobei eine Kanalisationseinheit (20) zum Kanalisieren und/oder Diskretisieren des Lichtes (200) in Abhängigkeit von dem empfangenen Licht (200) vorgesehen ist, die der Optikeinheit (30) optisch vorgeschaltet ist, wobei das empfangene Licht (200) durch die Kanalisationseinheit (20) in ein einkanaliges Licht (200) mit reduzierter Komplexität umgewandelt wird,
wobei die Kanalisationseinheit (20) ein Kanalisationselement (21) in Form einer optischen Faser zum Kanalisieren des Lichtes (200) aufweist und/oder die Kanalisationseinheit (20) eine Lochblende umfasst, um das empfangene Licht (200) auf das einkanalige Licht (200) zu reduzieren.

2. Messvorrichtung (10) nach Anspruch 1,
**dadurch gekennzeichnet,**
**dass** die Optikeinheit (30) zumindest ein Verzögerungselement (31), insbesondere in Form eines doppelbrechenden Mediums, umfasst.

3. Messvorrichtung (10) nach Anspruch 1 oder 2,
**dadurch gekennzeichnet,**
**dass** die Messvorrichtung (10), insbesondere die Optikeinheit (30), ein Polarisationselement (32) zum Beeinflussen einer Polarisation des Lichtes (200) für den polarisierten Lichtstrahl (210) aufweist.

4. Messvorrichtung (10) nach einem der vorhergehenden Ansprüche,
**dadurch gekennzeichnet,**
**dass** das Polarisationselement (32) zum Erzeugen einer linearen und/oder zufälligen Polarisation des Lichtstrahls (210) ausgebildet ist.

5. Messvorrichtung (10) nach einem der vorhergehenden Ansprüche,
**dadurch gekennzeichnet,**
**dass** die optische Faser eine Einmodenfaser zum Kanalisieren des Lichtes (200) ist.

6. Messvorrichtung (10) nach einem der vorhergehenden Ansprüche,
**dadurch gekennzeichnet,**
**dass** die Kanalisationseinheit (20) zum Formen eines Strahlengangs des Lichtes (200) einen Kollimator (22) aufweist.

7. Messvorrichtung (10) nach einem der vorhergehenden Ansprüche,
**dadurch gekennzeichnet,**
**dass** die Sensoreinheit (40) drei oder mehr Detektorelemente (41) aufweist, die insbesondere in einem Muster angeordnet sind.

8. Messvorrichtung (10) nach einem der vorhergehenden Ansprüche,
**dadurch gekennzeichnet,**
**dass** die Sensoreinheit (40) einen elektrischen Messausgang (43) zur Ausgabe einer Modulation eines Signals (205) und/oder zur Ausgabe von Datenpunkten (205.1) zur Modulation eines Signals (205) in Abhängigkeit von der Interferenz (204) aufweist.

9. Messvorrichtung (10) nach einem der vorhergehenden Ansprüche,
**dadurch gekennzeichnet,**
**dass** die Sensoreinheit (40) eine Auswerteschaltung (42) aufweist, in welcher die Detektorelemente (41) zum Erfassen der Interferenz (204) verschaltet sind, wobei die Auswerteschaltung (42) dazu ausgebildet ist, das Signal (205) und/oder die Datenpunkte (205.1) durch ein Multiplexverfahren, insbesondere in Form eines Raummultiplexverfahrens und/oder eines Zeitmultiplexverfahrens, bereitzustellen.

10. Messvorrichtung (10) nach einem der vorhergehenden Ansprüche,
**dadurch gekennzeichnet,**
**dass** die Detektorelemente (41) schichtartig auf einer Leiterplatte (44) der Sensoreinheit (40) befestigt, insbesondere aufgedruckt, sind.

11. Messvorrichtung (10) nach einem der vorhergehenden Ansprüche,
**dadurch gekennzeichnet,**
**dass** die Sensoreinheit (40) und/oder die Detektorelemente (41) zum Justieren der Messvorrichtung (10) relativ zur Optikeinheit (30) drehbar ausgestaltet sind.

12. Messsystem (1) zum Erkennen von Lichtparametern (201) von Licht (200) einer Lichtquelle (2) aufweisend
eine Messvorrichtung (10) nach einem der vorhergehenden Ansprüche, die eine Optikeinheit (30) zum Aufspalten eines polarisierten Lichtstrahls (210) des Lichtes (200) in einen ersten Teilstrahl (211) und einen zweiten Teilstrahl (212), die zueinander eine definierte Phasenverschiebung aufweisen, und eine Sensoreinheit (40) mit zumindest zwei Detektorelementen (41), die jeweils eine Polarisation (202) mit einer unterschiedlichen Orientierung um eine optische Achse (203) aufweisen, umfasst,
wobei der erste und zweite Teilstrahl (211, 212) durch die Optikeinheit (30) gemeinsam auf die Detektorelemente (41) ausrichtbar sind, um durch die Detektorelemente (41) eine Interferenz (204) des ersten und zweiten Teilstrahls (211, 212) zu erfassen,
wobei eine Auswerteeinheit (50) zum Auswerten der Interferenz (204) zum Erkennen von Lichtparametern (201) des Lichtes (200) vorgesehen ist.

13. Messsystem (1) nach Anspruch 12,
**dadurch gekennzeichnet,**
**dass** die Auswerteeinheit (50) zum Bestimmen der Lichtparameter (201) in Form einer Wellenlänge des Lichtes (200) in Abhängigkeit von einer Phase (204.1) der Interferenz (204), einer Bandbreite des Lichtes (200) in Abhängigkeit von einer Amplitude (204.2) der Interferenz (204) und/oder einer Leistung des Lichtes (200) in Abhängigkeit von einem Mittelwert (204.3) der Interferenz (204) ausgebildet ist.

14. Messverfahren (100) zum Erkennen von Lichtparametern (201) von Licht (200) einer Lichtquelle (2) durch ein Messsystem (1) nach Anspruch 12 oder 13, umfassend:
- Empfangen (101) von Licht (200) von einer Lichtquelle (2),
- Aufspalten (102) eines polarisierten Lichtstrahls (210) des Lichtes (200) in einen ersten Teilstrahl (211) und einen zweiten Teilstrahl (212), die zueinander eine definierte Phasenverschiebung aufweisen,
- Erzeugen (103) einer Interferenz (204) in Abhängigkeit von dem ersten und zweiten Teilstrahl (211, 212),
- Erkennen (104) von Lichtparametern (201) des Lichtes (200) in Abhängigkeit von der Interferenz (204).

## Claims

1. A measuring device (10) for measuring light (200) from a light source (2), comprising an optical unit (30) for splitting a polarized light beam (210) of the light (200) into a first partial beam (211) and a second partial beam (212), which have a defined phase shift relative to one another, and
a sensor unit (40) with at least two detector elements (41), each of which has a polarization (202) with a different orientation about an optical axis (203), wherein the first and second partial beams (211, 212) can be jointly directed by the optical unit (30) onto the detector elements (41) in order to detect interference (204) of the first and second partial beams (211, 212) by the detector elements (41),
wherein a channeling unit (20) for channeling and/or discretizing the light (200) in dependence on the received light (200) is provided, which is optically upstream of the optical unit (30), wherein the received light (200) is converted by the channeling unit (20) into a single-channel light (200) with reduced complexity,
wherein the channeling unit (20) comprises a channeling element (21) in the form of an optical fiber for channeling the light (200) and/or the channeling unit (20) comprises a pinhole aperture to reduce the received light (200) to the single-channel light (200).

2. A measuring device (10) according to claim 1,
**characterized in that**
the optical unit (30) comprises at least one delay element (31), in particular in the form of a birefringent medium.

3. A measuring device (10) according to claim 1 or 2,
**characterized in that**
the measuring device (10), in particular the optical unit (30), comprises a polarization element (32) for influencing a polarization of the light (200) for the polarized light beam (210).

4. A measuring device (10) according to one of the preceding claims,
**characterized in that**
the polarization element (32) is configured to generate a linear and/or random polarization of the light beam (210).

5. A measuring device (10) according to any of the preceding claims,
**characterized in that**
the optical fiber is a single-mode fiber for channeling the light (200).

6. A measuring device (10) according to any of the preceding claims,
**characterized in that**
the channeling unit (20) comprises a collimator (22) for shaping a beam path of the light (200).

7. A measuring device (10) according to any of the preceding claims,
**characterized in that**
the sensor unit (40) comprises three or more detector elements (41) arranged, in particular, in a pattern.

8. A measuring device (10) according to one of the preceding claims,
**characterized in that**
the sensor unit (40) comprises an electrical measurement output (43) for outputting a modulation of a signal (205) and/or for outputting data points (205.1) for modulating a signal (205) as a function of the interference (204).

9. A measuring device (10) according to any one of the preceding claims,
**characterized in that**
the sensor unit (40) comprises an evaluation circuit (42) in which the detector elements (41) for detecting the interference (204) are interconnected, wherein the evaluation circuit (42) is configured to provide the signal (205) and/or the data points (205.1) by means of a multiplexing method, in particular in the form of a space-division multiplexing method and/or a time-division multiplexing method.

10. A measuring device (10) according to one of the preceding claims,
**characterized in that**
the detector elements (41) are mounted in layers on a printed circuit board (44) of the sensor unit (40), in particular by printing.

11. A measuring device (10) according to any of the preceding claims,
**characterized in that**
the sensor unit (40) and/or the detector elements (41) are rotatable for aligning the measuring device (10) relative to the optical unit (30).

12. A measurement system (1) for detecting light parameters (201) of light (200) from a light source (2), comprising
a measurement device (10) according to any one of the preceding claims, which comprises an optical unit (30) for splitting a polarized light beam (210) of the light (200) into a first partial beam (211) and a second partial beam (212), which exhibit a defined phase shift relative to one another, and a sensor unit (40) with at least two detector elements (41), each of which has a polarization (202) with a different orientation about an optical axis (203),
wherein the first and second partial beams (211, 212) can be jointly directed by the optical unit (30) onto the detector elements (41) in order to detect, via the detector elements (41), an interference (204) of the first and second partial beams (211, 212),
wherein an evaluation unit (50) is provided for evaluating the interference (204) to detect light parameters (201) of the light (200).

13. A measurement system (1) according to claim 12,
**characterized in that**
the evaluation unit (50) is configured to determine the light parameters (201) in the form of a wavelength of the light (200) as a function of a phase (204.1) of the interference (204), a bandwidth of the light (200) as a function of an amplitude (204.2) of the interference (204), and/or a power of the light (200) as a function of a mean value (204.3) of the interference (204).

14. A measurement method (100) for detecting light parameters (201) of light (200) from a light source (2) using a measurement system (1) according to claim 12 or 13, comprising:
- receiving (101) light (200) from a light source (2),
- splitting (102) a polarized light beam (210) of the light (200) into a first partial beam (211) and a second partial beam (212), which have a defined phase shift relative to one another,
- generating (103) interference (204) based on the first and second partial beams (211, 212),
- detecting (104) light parameters (201) of the light (200) based on the interference (204).

## Revendications

1. Dispositif de mesure (10) destiné à mesurer la lumière (200) d'une source lumineuse (2), comprenant
une unité optique (30) destinée à diviser un faisceau lumineux polarisé (210) de la lumière (200) en un premier faisceau partiel (211) et un deuxième faisceau partiel (212), qui présentent entre eux un déphasage défini, et
une unité de capteurs (40) comportant au moins deux éléments détecteurs (41), qui présentent chacun une polarisation (202) avec une orientation différente autour d'un axe optique (203), les premier et deuxième faisceaux partiels (211, 212) peuvent être orientés conjointement par l'unité optique (30) vers les éléments détecteurs (41) afin de détecter, par l'intermédiaire des éléments détecteurs (41), une interférence (204) entre les premier et deuxième faisceaux partiels (211, 212),
une unité de canalisation (20) étant prévue pour canaliser et/ou discrétiser la lumière (200) en fonction de la lumière reçue (200), laquelle est placée en amont de l'unité optique (30) sur le plan optique, la lumière reçue (200) étant convertie par l'unité de canalisation (20) en une lumière monocanal (200) de complexité réduite,
l'unité de canalisation (20) comportant un élément de canalisation (21) sous la forme d'une fibre optique pour canaliser la lumière (200) et/ou l'unité de canalisation (20) comprenant un diaphragme à trou pour réduire la lumière reçue (200) en lumière monocanal (200).

2. Dispositif de mesure (10) selon la revendication 1, **caractérisé en ce que** l'unité optique (30) comprend au moins un élément de retard (31), notamment sous la forme d'un milieu biréfringent.

3. Dispositif de mesure (10) selon la revendication 1 ou 2, **caractérisé en ce que** le dispositif de mesure (10), en particulier l'unité optique (30), comporte un élément de polarisation (32) destiné à influencer la polarisation de la lumière (200) pour le faisceau lumineux polarisé (210).

4. Dispositif de mesure (10) selon l'une des revendications précédentes, **caractérisé en ce que** l'élément de polarisation (32) est conçu pour générer une polarisation linéaire et/ou aléatoire du faisceau lumineux (210).

5. Dispositif de mesure (10) selon l'une des revendications précédentes, **caractérisé en ce que** la fibre optique est une fibre monomode destinée à canaliser la lumière (200).

6. Dispositif de mesure (10) selon l'une des revendications précédentes, **caractérisé en ce que** l'unité de canalisation (20) comporte un collimateur (22) pour former un trajet optique de la lumière (200).

7. Dispositif de mesure (10) selon l'une des revendications précédentes, **caractérisé en ce que** l'unité de capteurs (40) comprend trois éléments de détection (41) ou plus, qui sont notamment disposés selon un motif.

8. Dispositif de mesure (10) selon l'une des revendications précédentes, **caractérisé en ce que** l'unité de capteurs (40) comporte une sortie de mesure électrique (43) destinée à délivrer une modulation d'un signal (205) et/ou à délivrer des points de données (205.1) pour la modulation d'un signal (205) en fonction de l'interférence (204).

9. Dispositif de mesure (10) selon l'une des revendications précédentes, **caractérisé en ce que** l'unité de capteurs (40) comporte un circuit d'évaluation (42) dans lequel les éléments détecteurs (41) destinés à détecter l'interférence (204) sont interconnectés, le circuit d'évaluation (42) étant conçu pour fournir le signal (205) et/ou les points de données (205.1) par un procédé de multiplexage, en particulier sous la forme d'un multiplexage spatial et/ou d'un multiplexage temporel.

10. Dispositif de mesure (10) selon l'une des revendications précédentes, **caractérisé en ce que** les éléments détecteurs (41) sont fixés en couches sur une carte de circuit imprimé (44) de l'unité de capteurs (40), en particulier par impression.

11. Dispositif de mesure (10) selon l'une des revendications précédentes, **caractérisé en ce que** l'unité de capteurs (40) et/ou les éléments détecteurs (41) sont conçus de manière à pouvoir tourner pour ajuster le dispositif de mesure (10) par rapport à l'unité optique (30).

12. Système de mesure (1) destiné à détecter des paramètres lumineux (201) de la lumière (200) provenant d'une source lumineuse (2), comprenant
un dispositif de mesure (10) selon l'une des revendications précédentes, qui comprend une unité optique (30) destinée à diviser un faisceau lumineux polarisé (210) de la lumière (200) en un premier faisceau partiel (211) et un deuxième faisceau partiel (212), qui présentent entre eux un déphasage défini, et une unité de capteurs (40) comportant au moins deux éléments détecteurs (41), qui présentent chacun une polarisation (202) avec une orientation différente autour d'un axe optique (203),
les premier et deuxième faisceaux partiels (211, 212) pouvant être orientés conjointement par l'unité optique (30) vers les éléments détecteurs (41) afin de détecter, par les éléments détecteurs (41), une interférence (204) des premier et deuxième faisceaux partiels (211, 212),
une unité d'évaluation (50) étant prévue pour évaluer l'interférence (204) afin de déterminer des paramètres lumineux (201) de la lumière (200).

13. Système de mesure (1) selon la revendication 12, **caractérisé en ce que** l'unité d'évaluation (50) est conçue pour déterminer les paramètres lumineux (201) sous la forme d'une longueur d'onde de la lumière (200) en fonction d'une phase (204.1) de l'interférence (204), d'une largeur de bande de la lumière (200) en fonction d'une amplitude (204.2) de l'interférence (204) et/ou d'une puissance de la lumière (200) en fonction d'une valeur moyenne (204.3) de l'interférence (204).

14. Procédé de mesure (100) pour détecter des paramètres lumineux (201) de la lumière (200) d'une source lumineuse (2) à l'aide d'un système de mesure (1) selon la revendication 12 ou 13, comprenant :
- la réception (101) de la lumière (200) provenant d'une source lumineuse (2),
- la division (102) d'un faisceau lumineux polarisé (210) de la lumière (200) en un premier faisceau partiel (211) et un deuxième faisceau partiel (212) qui présentent entre eux un déphasage défini,
- la génération (103) d'une interférence (204) en fonction des premier et deuxième faisceaux partiels (211, 212),
- la détection (104) de paramètres lumineux (201) de la lumière (200) en fonction de l'interférence (204).
